# EUROPÄISCHE PATENTSCHRIFT

(11) **EP 2 301 472 B1**
(45) Veröffentlichungstag und Bekanntmachung des Hinweises auf die Patenterteilung: **23.01.2013**
(21) Anmeldenummer: 10190096.7
(22) Anmeldetag: 16.11.2006
(51) Int. Cl.: A61C 5/06, A61C 9/00, A61C 19/00

(54) **Dentaler Handgriff**
Dental handgrip
Pièce à main dentaire

(43) Veröffentlichungstag der Anmeldung: 30.03.2011
(62) Teilanmeldung aus: 06023781.5
(73) Patentinhaber: W & H Dentalwerk Bürmoos GmbH, 5111 Bürmoos (AT)
(72) Erfinder: Wagner, Hannes, 5023, Salzburg (AT); Teufelberger, Gunther, 5111, Bürmoos (AT)
(74) Vertreter: Benda, Ralf

(56) Entgegenhaltungen:
- WO-A-01/17454
- WO-A-2006/136398
- DE-U1- 8 904 429
- FR-A- 2 190 176
- US-A- 3 890 713
- US-A- 4 092 778
- US-A1- 2005 026 106
- US-B1- 6 305 934

## Beschreibung

Die vorliegende Erfindung betrifft einen dentalen Handgriff zur Abgabe von Füllmasse in eine Zahnkavität.

Ein derartiger Handgriff ist aus der Patentanmeldung WO 01/17454 A1 bekannt. Er dient zur Füllung von aushärtbaren Dentalmassen aus Kunststoffverbindungen oder Kunstharzen in zuvor präparierte Zahnkavitäten. Die Aushärtung der Kunststoffe oder Kunstharze erfolgt bevorzugt durch Bestrahlen mit Strahlung mit einer Wellenlängen im Bereich von etwa 320 nm - 400 nm oder mit blauem Licht mit einem Wellenlängenbereich von etwa 400 nm - 470 nm. Die Strahlungsleistung der Strahlung beträgt üblicherweise in etwa zumindest 400 mW/cm², bevorzugt mehr als 900 mW/cm².

Die Förderung der Füllmasse aus dem Füllmassebehältnis erfolgt bei diesem Handgriff durch manuelle Betätigung eines Hebels oder ähnlicher Bedienelemente. Damit sind mehrere Nachteile verbunden: Der Anwender kann sich nicht ausschließlich auf das zielgenaue Einbringen der Füllmasse in die Zahnkavität und das Formen und Verdichten der Füllmasse konzentrieren, sondern er muss einen Teil seiner Aufmerksamkeit beständig der Abgabe der Füllmasse zuwenden. Die Bedienelemente, insbesondere wenn sie als Hebel ausgebildet sind, benötigen sehr viel Platz und stören beim Arbeiten in der räumlich beengten Mundhöhle, so dass verschiedene Bereich der Mundhöhle mit einem derartigen Handgriff nur schwer zugänglich sind. Die Bedienelemente behindern die Sicht auf die Präparationsstelle. Schließlich ist auch eine gleichmäßige Förderung der Füllmasse nicht gewährleistet.

Das Patent US 3,890,713 offenbart ein Handstück zur Abgabe von Amalgam oder ähnlichen Füllmaterialien aus einer Ampulle in eine Zahnkavität. Das Handstück ist mit einem pneumatischen Schwingungserreger versehen, der einen biegbare Schaft vor und zurück bewegt, so dass der Schaft das aus der Ampulle ausgetretene Amalgam aus dem Handstück drückt und in der Zahnkavität verdichtet. Zusätzlich überträgt der Schwingungserreger Schwingungen auf die Ampulle.

Das Gebrauchsmuster DE 89 04 429 U1 beschreibt ein Gerät zum Aufbringen einer metallhaltigen Flüssigkeit durch Versprühen auf einen Zahn und zum Abscheiden des Metalls auf dem Zahn. Das Gerät weist einen Vorratsbehälter mit einer kolbenartigen Vorrichtung zur Druckbeaufschlagung einer Flüssigkeit auf, so dass die Flüssigkeit aus dem Vorratsbehälter über einen Schlauch dem Handstück zuführbar ist. Um das Versprühen der metallhaltigen Flüssigkeit zu begünstigen, ist eine Ultraschallquelle vorgesehen, die das Rohr, aus dem die Flüssigkeit austritt, in Schwingung versetzt.

Der vorliegenden Erfindung liegt daher die Aufgabe zugrunde einen dentalen Handgriff zur Abgabe von Füllmasse zu schaffen, der die oben angeführten Nachteile überwindet. Insbesondere soll der dentale Handgriff das Füllen einer Zahnkavität für den Zahnarzt vereinfachen und eine verbesserte Handhabung aufweisen.

Diese Aufgabe wird gemäß der vorliegenden Erfindung durch einen Handgriff mit den Merkmalen des Anspruchs 1 gelöst. Besonders vorteilhafte Ausführungsformen sind in den Unteransprüchen angeführt.

Der erfindungsgemäße dentale Handgriff zur Abgabe von Füllmasse weist eine fluidbetriebene Fördervorrichtung zur Förderung der Füllmasse aus dem Füllmassebehältnis auf, wobei die Versorgung des Handgriffs mit dem Antriebsfluid bevorzugt über eine externe Fluidquelle erfolgt. Als Antriebsfluid kann ein Druckgas, insbesondere Druckluft oder eine Flüssigkeit, insbesondere Wasser dienen. Am Handgriff ist des Weiteren ein Kupplungselement zur Verbindung der Fördervorrichtung mit einer externen Fluidquelle vorgesehen, wobei das Kupplungselement derart ausgebildet ist, dass es an ein Gegenkupplungselement, das zum Anschluss an ein dentales Handinstrument mit einer anderen Funktion vorgesehen ist, kuppelbar ist. Ist das Gegenkupplungselement Teil einer Dentaleinheit, so kann die Menge der an die Fördervorrichtung zugeführten Luft über eine Fußsteuerung, die mit der Dentaleinheit verbunden ist, gesteuert werden. Damit wird in vorteilhafter Weise erreicht, dass die Förderung gleichmäßig und automatisch abläuft, ohne dass der Anwender eine Fördertätigkeit ausführen muss, wie zum Beispiel einen Hebel zu betätigen. Auch entfallen am Handgriff alle Bedienelement für die Förderung, so dass der Anwender eine bessere Sicht auf die Präparationsstelle hat.

Der erfindungsgemäße Handgriff umfasst einen Schwingungserreger, der direkt oder indirekt mit der Anschlussvorrichtung verbindbar oder verbunden ist, so dass die vom Schwingungserreger erzeugte Schwingung auf die Füllmasse übertragbar ist, wodurch die Viskosität der Füllmasse verringert und die Füllmasse leichter förderbar ist. Der Schwingungserreger ist als fluidbetriebener Schwingungserreger mit einer hohlen Schwingachse ausgebildet. Der Schwingungserreger und die Fördervorrichtung sind direkt oder indirekt miteinander verbunden über die hohle Schwingachse des Schwingungserregers, so dass zumindest ein Teil des Fluids zum Betrieb der Fördervorrichtung und des Schwingungserregers nutzbar ist. Ein Handgriff gemäß dieser Ausführungsform ist insbesondere herstellungs- und montagetechnisch sehr einfach und kompakt aufgebaut, wodurch die Herstellungs- und Montagekosten deutlich reduziert werden können. Ein derartiger Handgriff nützt auch das Antriebsfluid effektiv und sparsam. Die Verbindung zwischen dem Schwingungserreger und der Fördervorrichtung kann selbstverständlich auch über eine oder mehrere Leitungen, Kanäle, Bohrungen oder andere Elemente erfolgen. Die Verbindung kann auch weitere Funktionselemente wie zum Beispiel Ventile, insbesondere zur Druckbegrenzung beinhalten.

Die Erfindung wird nachfolgend anhand bevorzugter Ausführungsbeispiele und Bezug nehmend auf die beigefügten Zeichnungen erläutert:
Figur 1 zeigt ein erstes Ausführungsbeispiel eines dentalen Handgriffs zur Abgabe von Füllmasse mit einem lösbar mit dem Handgriff verbindbaren Schwingungsüberträger zur Übertragung von Schwingungen auf das Füllmassebehältnis, wobei dieses Ausführungsbeispiel kein Gegenstand der beanspruchten Erfindung ist.
Figur 2 zeigt den dentalen Handgriff aus Figur 1 mit einer in Vibration versetzbaren Sonde, die anstelle des Schwingungsüberträgers mit dem Handgriff verbunden ist, wobei dieses Ausführungsbeispiel kein Gegenstand der beanspruchten Erfindung ist.
Figur 3 zeigt ein erstes Ausführungsbeispiel eines Ventils als Teil einer im Handgriff angeordneten Schaltvorrichtung, durch die wahlweise die Fördervorrichtung zur Förderung der Füllmasse bzw. der Schwingungserreger oder die Lichtabgabevorrichtung betreibbar ist.
Figur 4 zeigt ein zweites Ausführungsbeispiel eines Ventils als Teil einer im Handgriff angeordneten Schaltvorrichtung, durch die wahlweise die Fördervorrichtung zur Förderung der Füllmasse bzw. der Schwingungserreger oder die Lichtabgabevorrichtung betreibbar ist.
Figur 5 zeigt ein zweites Ausführungsbeispiel eines dentalen Handgriffs zur Abgabe von Füllmasse mit einer manuell verschiebbaren Fördervorrichtung zur Förderung der Füllmasse, wobei dieses Ausführungsbeispiel kein Gegenstand der beanspruchten Erfindung ist.
Figur 6 zeigt eine Schnittdarstellung des Handgriffs aus Figur 5 mit nach vorne verschobener Lichtabgabevorrichtung und mit nach vorne bewegter Fördervorrichtung.
Figur 7 zeigt eine Schnittdarstellung des Handgriffs aus Figur 5 mit nach hinten verschobener Lichtabgabevorrichtung und mit nach hinten bewegter Fördervorrichtung.
Figur 8 zeigt ein drittes Ausführungsbeispiel eines dentalen Handgriffs zur Abgabe von Füllmasse mit einer pneumatisch betriebenen Fördervorrichtung zur Förderung der Füllmasse und einem pneumatisch betriebenen Schwingungserreger.
Figur 9 zeigt eine Schnittdarstellung des Handgriffs aus Figur 8 mit nach vorne verschobener Lichtabgabevorrichtung und mit nach vorne bewegter Fördervorrichtung.
Figur 10 zeigt eine Schnittdarstellung des Handgriffs aus Figur 8 mit nach hinten verschobener Lichtabgabevorrichtung und mit nach hinten bewegter Fördervorrichtung.
Figur 11 zeigt eine vergrößerte Darstellung der Schaltvorrichtung des Handgriffs aus Figur 8, wobei die Schaltstellung zum Betrieb der Lichtabgabevorrichtung ausgewählt ist.
Figur 12 zeigt eine vergrößerte Darstellung der Schaltvorrichtung des Handgriffs aus Figur 8, wobei die Schaltstellung zum pneumatischen Betrieb der Fördervorrichtung und des Schwingungserregers ausgewählt ist.
Figur 13 zeigt das Vorderende eines dentalen Handgriffs zur Abgabe von Füllmasse mit einem ersten Ausführungsbeispiel einer Sonde zum Formen und Glätten der Füllmasse.
Figur 14 zeigt das Vorderende eines dentalen Handgriffs zur Abgabe von Füllmasse mit einem zweiten Ausführungsbeispiel einer Sonde zum Formen und Glätten der Füllmasse.
Figur 15 zeigt das Vorderende eines dentalen Handgriffs zur Abgabe von Füllmasse mit einem dritten Ausführungsbeispiel einer Sonde zum Formen und Glätten der Füllmasse.
Figur 16 zeigt ein erstes Ausführungsbeispiel eines Behältnisses für die Füllmasse mit einer biegsamen Kanüle.
Figur 17 zeigt ein zweites Ausführungsbeispiel eines Behältnisses für die Füllmasse mit einer kurzen Kanüle, die in etwa in einem rechten Winkel zum Behältniskörper angeordnet ist.
Figur 18 zeigt ein drittes Ausführungsbeispiel eines Behältnisses für die Füllmasse mit einer langen Kanüle mit einem verdickten Vorderende.
Figur 19 zeigt ein erstes Ausführungsbeispiel einer Anschlussvorrichtung für ein Füllmassebehältnis mit einem kurzen Spenderohr.
Figur 20 zeigt ein zweites Ausführungsbeispiel einer Anschlussvorrichtung für ein Füllmassebehältnis mit einem langen Spenderohr.
Figur 21 zeigt ein drittes Ausführungsbeispiel einer Anschlussvorrichtung für ein Füllmassebehältnis mit einem in etwa in einem rechten Winkel zum Trägerteil angeordneten Spenderohr.

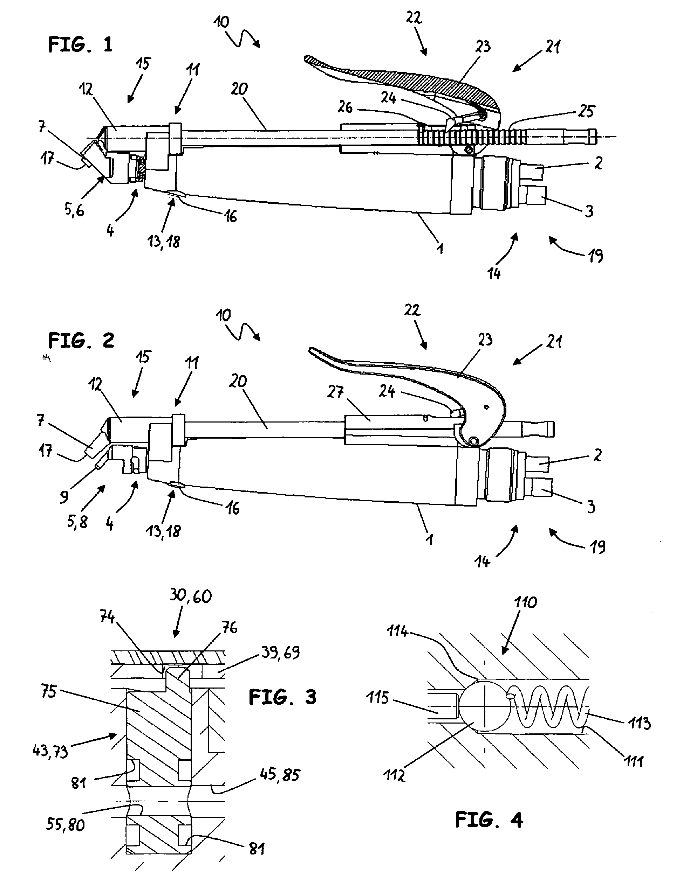

Der in den Figuren 1 und 2 dargestellte dentale Handgriff 10 zur Abgabe von Füllmasse in eine Zahnkavität besteht aus einem länglichen, im Wesentlichen zylindrischen Körper mit einer Außenhülse 1 mit einem ersten Ende 15 und einem zweiten Ende 19. Am zweiten Ende 19 ist ein Kupplungselement 14 vorgesehen, das bevorzugt so ausgebildet ist, dass es an ein Gegenkupplungselement, das zum Anschluss an ein dentales Handinstrument mit einer anderen Funktion vorgesehen ist, kuppelbar ist. Bei diesem dentalen Handinstrument kann es sich insbesondere um ein mit Druckluft betriebenes Turbinenhandstück oder Zahnsteinentfernungshandstück handeln. Das Kupplungselement 14 umfasst zumindest einen ersten Anschluss 2 an eine Fluidquelle, bevorzugt eine Druckgasquelle, insbesondere an eine Druckluftquelle, wobei das Fluid über eine im Inneren des Handgriffs 10 angeordnete Leitung oder über Kanäle einem Schwingungserreger (nicht dargestellt) zugeführt werden kann. Über Anschluss 3 wird das Fluid nach Passieren des Schwingungserregers wieder aus dem Handgriff 10 abgeleitet. Als Fluid kann selbstverständlich auch eine Flüssigkeit, bevorzugt Wasser verwendet werden.

Das Fluid treibt den Schwingungserreger an, der direkt oder indirekt mit einer Anschlussvorrichtung 4 und einem darin aufgenommenem Werkzeug 5 verbunden ist, so dass das Werkzeug 5 in Schwingung versetzt werden kann. Der Schwingungserreger kann zum Beispiel ein Laufrad, eine in Rotation versetzbare Hülse, die eine Schwingachse umgibt, oder eine in einer Kammer aufgenommene, in Bewegung versetzbare Kugel oder Scheibe umfassen.

Die Anschlussvorrichtung 4 ist als lösbare Anschlussvorrichtung, bevorzugt als Schnellkupplung, insbesondere als Bajonettkupplung ausgebildet, so dass an sie unterschiedliche Werkzeuge 5 anschließbar sind. In Figur 1 ist als Werkzeug 5 beispielhaft ein Schwingungsüberträger oder Sonotrode 6 abgebildet, dessen erstes Ende mit der Anschlussvorrichtung 4 lösbar verbindbar ist und dessen zweites Ende das Füllmassebehältnis 12 kontaktiert. Das zweite Ende der Sonotrode 6 kann unterschiedliche Formen aufweisen, zum Beispiel einen Rücksprung, eine Nut oder eine Bohrung. Wesentlich ist, dass eine kontaktierende Verbindung zwischen dem zweiten Ende des Schwingungsüberträgers 6 und zumindest einem Teil des Füllmassebehältnis 12, zum Beispiel dem Spenderohr 7 entsteht, so dass die Schwingung des Schwingungserregers auf das Behältnis 12 und die darin befindliche Füllmasse übertragen wird, wodurch die Füllmasse aufgrund der durch die Schwingung hervorgerufenen Viskositätsänderung einfacher in die Zahnkavität einbringbar ist.

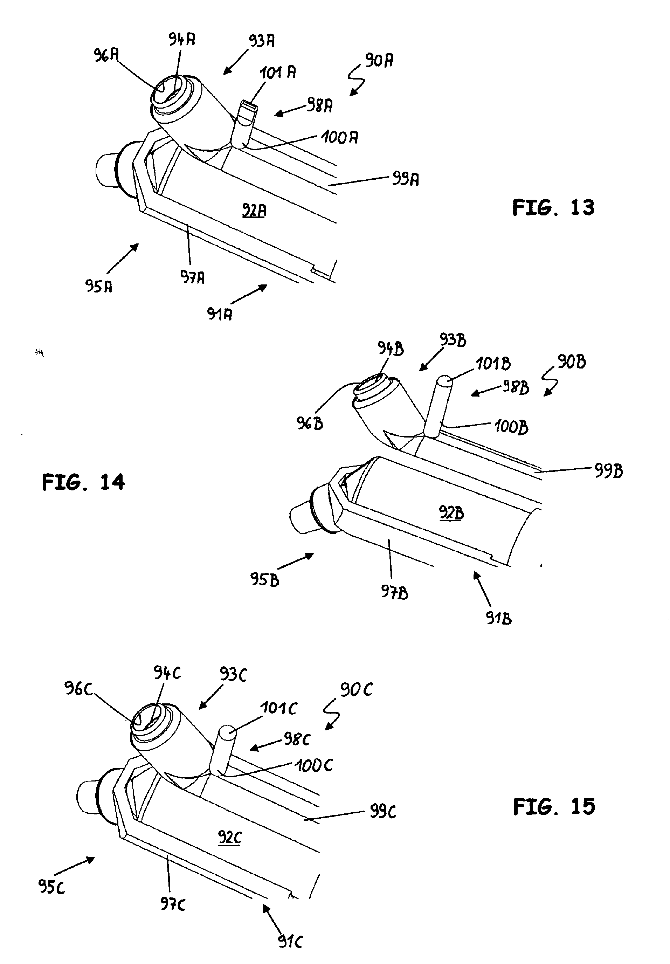

In Figur 2 ist das in die Anschlussvorrichtung 4 eingesetzte Werkzeug 5 als Sonde 8 ausgebildet, die der Zahnarzt zum Glätten, Stopfen, Formen oder Verdichten der in die Zahnkavität eingebrachten Füllmasse einsetzt. Die Sonde 8 weist wiederum ein erstes, mit der Anschlussvorrichtung 4 lösbar verbindbares Ende und ein zweites Ende oder Arbeitsende 9 auf. Das Arbeitsende 9, das zum Glätten, Stopfen, Formen oder Verdichten verwendet wird, kann dabei unterschiedliche Formen aufweisen, mit zum Beispiel runden, kugeligen, ovalen, abgestuften, keilförmigen oder sich verjüngenden Bereichen oder so gestaltet sein, wie es beispielhaft in den Figuren 13 - 15 dargestellt ist. Durch die Verbindung mit dem Schwingungserreger ist die Sonde 8 in Schwingung versetzbar, so dass eine deutlich bessere Arbeitswirkung erzielt wird als bei der Verwendung einer herkömmlichen, mit der Hand geführten Sonde.

Der Vorteil der Anschlussvorrichtung 4 besteht in der erweiterten Anwendbarkeit des Handgriffs 10 zum Füllen der Kavität mit Füllmasse und anschließender optimierter Nachbehandlung der Füllmasse mit der in Schwingung versetzbaren Sonde 8. Zur Durchführung der beiden Aufgaben ist es nur notwendig, die beiden Werkzeuge 6, 8 auszutauschen.

Der Handgriff 10 umfasst des Weiteren eine Lichtabgabevorrichtung 13 mit einer Lichtabgabefläche 16, die im Bereich des ersten Endes 15 des Handgriffs 10 durch eine Öffnung in der Außenhülse 1 austritt. Die Lichtabgabefläche 16 wird durch das Ende eines Lichtleiters 18, zum Beispiel eines Glasstabs oder Glasfaserstabs gebildet. Die Lichtabgabevorrichtung 13 umfasst des Weiteren eine im Handgriff 10 angeordnete Lichtquelle, die Strahlung mit einer Wellenlänge und Strahlungsleistung zum Aushärten von Füllmaterial emittiert, zum Beispiel ein optisches Halbleiterelement, und eine Energiequelle, zum Beispiel eine oder mehrere Batterien, Akkumulatoren oder einen Generator zur Versorgung der Lichtquelle. Damit ist ein Handgriff geschaffen, zu dessen Betrieb es ausreicht, diesen mit einer Fluidquelle zu verbinden und der unabhängig von anderen Medienquellen, insbesondere einer Energiequelle ist. Selbstverständlich ist es jedoch auch möglich Kupplungselement 14 mit elektrischen Kontakten zu versehen, so dass die Energieversorgung der Lichtquelle über eine externe Energiequelle erfolgt oder Kupplungselement 14 mit einem Lichtleiter auszustatten, so das der Handgriff mit Strahlung einer externen Strahlungsquelle versorgt wird. Anstelle des Lichtleiters kann die Lichtquelle auch in der Nähe der Öffnung der Außenhülse 1 vorgesehen sein, so dass die Lichtabgabefläche 16 als Teil der Lichtquelle ausgeführt ist.

Handgriff 10 kann somit in einer besonders bevorzugten Ausführungsform zur Durchführung von drei Funktionen verwendet werden, nämlich zum Einfüllen von Füllmasse in eine Kavität, zur Nachbehandlung der Füllmasse mit der in Schwingung versetzbaren Sonde 8 und zum Aushärten der Füllmasse. Selbstverständlich sind jedoch auch einfachere Ausführungsformen möglich, bei denen nur zwei der drei Funktionen durch den Handgriff ausführbar sind, zum Beispiel Füllen und Nachbehandeln der Füllmasse, Füllen und Aushärten der Füllmasse oder Nachbehandeln und Aushärten der Füllmasse. Jede dieser Ausführungsformen vereinfacht die Restauration einer Zahnkavität für den Zahnarzt und macht sie weniger zeitaufwendig.

Handgriff 10 ist mit einer Fördervorrichtung 21 versehen, die vom Anwender manuell bedienbar ist. Fördervorrichtung 21 umfasst eine Schubstange 20, die über einen Vortriebsmechanismus 22 in Richtung des ersten Endes 15 des Handgriffs 10 bewegbar ist. Der Vortriebsmechanismus 22 besteht aus einem schwenkbaren Hebel 23, einem durch eine Feder vorgespannten Eingriffselement 24, das mit dem Hebel 23 drehbar verbunden ist, zum Beispiel einer Klinke mit einem keilförmigen Vorderende, und aus einem mit Zähnen versehenen Abschnitt 25 der Schubstange 20, in welchen das Eingriffselement 24 eingreift.

Die Vorwärtsbewegung der Schubstange 20 in Richtung des ersten Endes 15 erfolgt durch eine Hin- und Herbewegung des Hebels 23, wobei durch das Schwenken des Hebels 23 in Richtung des ersten Endes 15 und der damit verursachten Bewegung des Eingriffselements 24 die Schubstange 20 ebenfalls in Richtung des ersten Endes 15 bewegt wird. Durch Schwenken des Hebels 23 in Richtung des zweiten Endes 19 wird das Eingriffselement 24 ebenfalls in diese Richtung verschoben, wodurch es in einen anderen, näher zum Ende 19 gelegenen Zahn des Abschnitts 25 eingreift. Eine Feder 26, die die Schubstange 20 in ihrem Abschnitt 25 umgibt, verhindert ein ungewolltes Zurückrutschen der Schubstange 20 während des Schwenkens des Hebels 23 in Richtung des zweiten Endes 19. Die Rückwärtsbewegung der Schubstange 20 in Richtung des zweiten Endes 19 erfolgt durch Anziehen an der Schubstange 20, wobei diese bevorzugt an jenem Ende, das in Richtung des zweiten Endes 19 des Handgriffs 10 weist, ein Griffelement, zum Beispiel in Form eines Griffmusters oder eines Rücksprungs aufweist.

Selbstverständlich kann der Vortriebsmechanismus 22 auch anders ausgeführt sein, zum Beispiel mit einem drehbaren Knopf oder einem verschiebbaren Schieber anstelle des Hebels 23 oder eines oder mehrere Zahnräder anstelle des klinkenförmigen Eingriffelements 24. Teile der Fördervorrichtung 21, insbesondere der gezähnte Abschnitt 25 können durch ein Gehäuse 27 abgedeckt sein.

Am ersten Ende 15 des Handgriffs 10 ist eine Anschlussvorrichtung 11 für ein Füllmassebehältnis 12 vorgesehen. Die Anschlussvorrichtung 11 kann unterschiedlich ausgeführt sein, zum Beispiel als Steckverbindung, Klemmverbindung oder als Schnellverbindung, insbesondere als Bajonettverbindung. Das Füllmassebehältnis 12 weist einen Innenraum auf, in dem die Füllmasse aufgenommen ist, eine Abgabeöffnung 17, durch die die Füllmasse austreten kann, und eine bewegbare, verschiebbare Rückwand. Wird die Fördervorrichtung 21 betrieben, so wandert Schubstange 20 in Richtung der Anschlussvorrichtung 11, bis sie die Rückwand des Füllmassebehältnisses 12 erreicht. Durch das weitere Vorwärtstreiben der Schubstange 20 wird die Rückwand ebenfalls in Richtung der Abgabeöffnung 17 verschoben, wodurch die Füllmasse aus dem Behältnis 12 gedrückt wird.

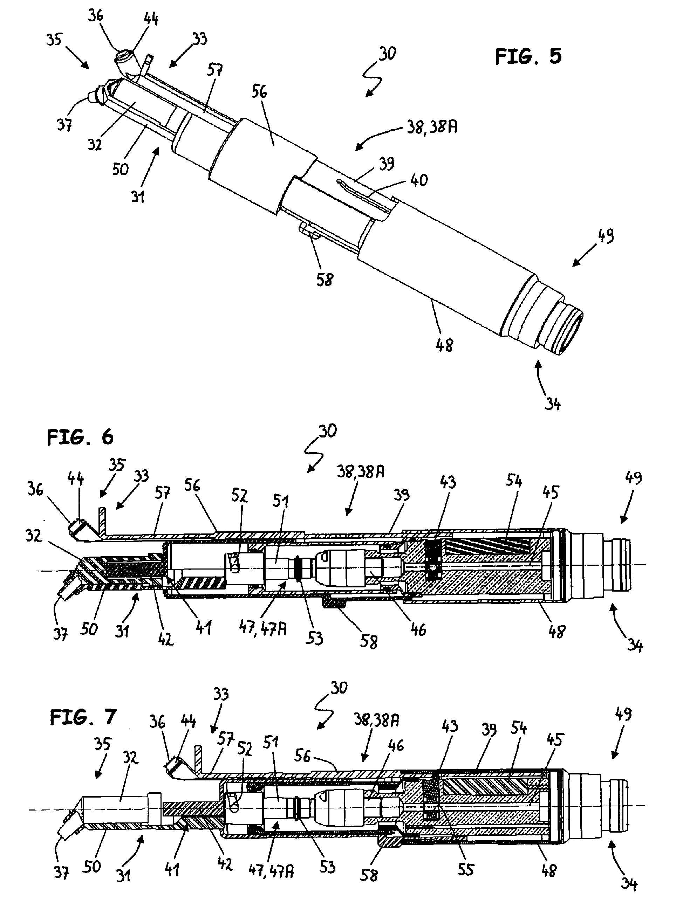

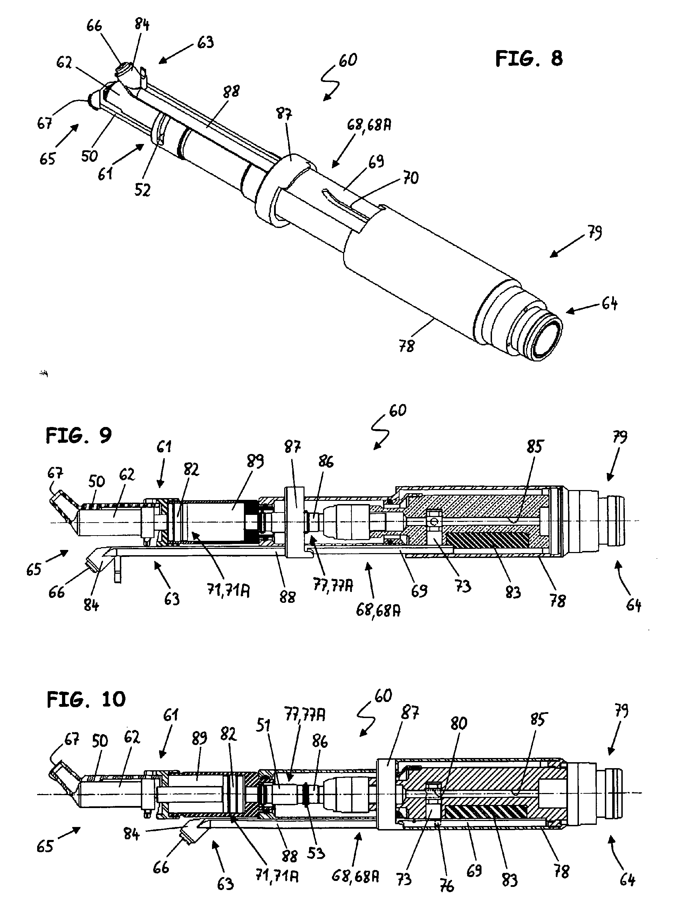

In den Figuren 5 - 7 ist ein zweites Ausführungsbeispiel eines dentalen Handgriffs 30 zur Abgabe von Füllmasse in eine Zahnkavität und in den Figuren 8 - 10 ist ein drittes Ausführungsbeispiel eines derartigen dentalen Handgriffs 60 dargestellt. Gleiche Bauteile werden im Folgenden für beide Handgriffe 30, 60 gemeinsam beschrieben.

Die Handgriffe 30, 60 bestehen aus einem länglichen, im Wesentlichen zylindrischen Körper mit einer Außenhülse 48, 78 und haben ein erstes Ende 35, 65 und ein zweites Ende 49, 79. Am zweiten Ende 49, 79 ist ein Kupplungselement 34, 64 vorgesehen, das bevorzugt so ausgebildet ist, dass es an ein Gegenkupplungselement, das zum Anschluss an ein dentales Handinstrument mit einer anderen Funktion vorgesehen ist, kuppelbar ist. Bei diesem dentalen Handinstrument kann es sich insbesondere um ein mit Druckluft betriebenes Turbinenhandstück oder Zahnsteinentfernungshandstück oder um ein elektrisch betriebenes Hand- oder Winkelstück oder um einen dentalen Kleinmotor, insbesondere einen Elektromotor handeln.

Kupplungselement 34, 64 weist zumindest einen Anschluss an eine Fluidquelle auf, von dem eine Fluidleitung 45, 85 in den Handgriff 30, 60 führt. Kupplungselement 34, 64 weist des Weiteren zumindest zwei elektrische Kontakte auf, von denen elektrische Leitungen zu zumindest einem Verbraucher im Handgriff 30, 60 führen. Kupplungselement 34, 64 kann verschieden ausgeführt sein, zum Beispiel als Steckkupplung, Bajonettkupplung oder als Schraubkupplung, bevorzugt ist sie jedoch als drehbare Steckkupplung ausgebildet.

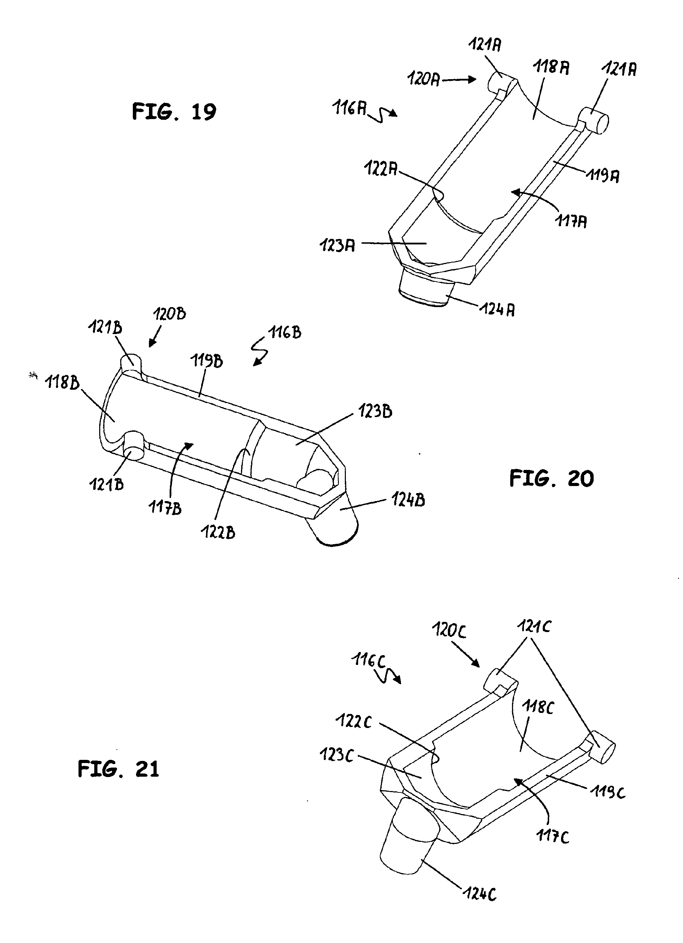

Am ersten Ende 35, 65 des Handgriffs 30, 60 ist eine Anschlussvorrichtung 31, 61 für ein Füllmassebehältnis 32, 62 vorgesehen. Die Anschlussvorrichtung 31, 61 kann unterschiedlich ausgeführt sein, zum Beispiel als Steckverbindung, Klemmverbindung oder als Schnellverbindung, insbesondere als Bajonettverbindung 52. Bevorzugt umfasst die Anschlussvorrichtung 31, 61 eine Sonotrode 50, die besonders bevorzugt als Aufnahme, insbesondere als längliche, mit einer Basis und einem darum verlaufenden Rand versehene Aufnahme ausgeführt ist, in welche das Füllmassebehältnis 32, 62 einsetzbar, einsteckbar oder in sonstiger Weise befestigbar ist. Die Sonotrode 50 kann zum Beispiel so wie in den Figuren 19 - 21 dargestellt ausgebildet sein.

Anschlussvorrichtung 31, 61 und insbesondere Sonotrode 50 sind mit einem im Inneren des Handgriffs 30, 60 angeordneten Schwingungserreger 47, 77 verbunden. Schwingungserreger 47, 77 kann als elektrischer Schwingungserreger, zum Beispiel als Piezoelement oder als magnetostriktives Element, oder bevorzugt als fluid-betriebener Schwingungserreger 47A, 77A ausgebildet ist. Der fluid-betriebene Schwingungserreger 47A, 77A kann zum Beispiel ein Laufrad oder eine in einer Kammer aufgenommene, in Bewegung versetzbare Kugel oder Scheibe umfassen und mit einem Druckgas oder mit einer Flüssigkeit betrieben werden. In dem in den Figuren 5 - 10 dargestellten Ausführungsbeispielen wird der Schwingungserreger 47A, 77A mit Druckluft betrieben und umfasst eine hohle Schwingachse 46, 86, die mit der Fluidleitung 45, 85 verbunden ist. Druckluft fließt in die Schwingachse 46, 86 und tritt durch Bohrungen in der Schwingachse 46, 86 aus. Eine Drehhülse 51 ist über den Bohrungen angeordnet und wird durch die austretende Druckluft derart in Rotation versetzt, dass die Schwingachse 46, 86 in Vibration versetzt wird. O-Ringe 53 begrenzen die axiale Bewegung der Drehhülse 51. Die durch die Bohrungen ausgetretene Luft fließt durch Zwischenräume oder Leitungen im Inneren des Handgriffs 30, 60 zurück in Richtung des Kupplungselements 34, 64.

Handgriff 30, 60 ist mit einer Lichtabgabevorrichtung 33, 63 versehen, die eine Lichtquelle 44, 84, zum Beispiel zumindest ein optisches Halbleiterelement, insbesondere zumindest eine LED umfasst. Die Lichtquelle 44, 84 ist über elektrische Leitungen im Inneren des Handgriffs 30, 60 mit den elektrischen Kontakten des Kupplungselements 34, 64 verbunden. Die Lichtquelle 44, 84 emittiert Strahlung mit einer Wellenlänge und Strahlungsleistung, die zum Aushärten von Füllmaterial geeignet ist.

Lichtabgabevorrichtung 33, 63 insbesondere Lichtabgabefläche 36, 66 von Lichtabgabevorrichtung 33, 63 ist bevorzugt am ersten Ende 35, 65 des Handgriffs 30, 60 angeordnet bzw. anordenbar, wo sich auch Füllmassebehältnis 32, 62 befindet. Diese Anordnung bringt für den Anwender den Vorteil einer einfachen Handhabung des Handgriffs 30, 60, birgt jedoch auch die Gefahr, dass versehentlich Füllmasse aus dem Füllmassebehältnis 32, 62 abgegeben wird und gleichzeitig die Lichtabgabevorrichtung 33, 63 Licht auf die Füllmasse abstrahlt, so dass Füllmasse ausgehärtet wird, obwohl sich diese zum Beispiel noch nicht an ihrem gewünschten Platz befindet oder noch nicht optimal in der Zahnkavität verteilt ist. Um diese Gefahr zu minimieren, weist der dentale Handgriff 30, 60 mehrere Sicherungsmittel zur Verhinderung einer verfrühten oder versehentlichen Lichtabgabe auf die Füllmasse auf.

Diese Sicherungsmittel können eine Vielzahl unterschiedlicher Maßnahmen und Vorrichtungen umfassen. So sind die Lichtabgabefläche(n) 36, 66 der Lichtabgabevorrichtung 33, 63 und die Abgabeöffnung(en) 37, 67 des Füllmassebehältnisses 32, 62 so angeordnet, dass sie in unterschiedliche Richtungen weisen. Wesentlich ist dabei, dass die auf die Füllmasse auftreffende Leistung der Strahlung zumindest so gering ist, dass keine vorzeitige, für den Patienten nachteilige Aushärtereaktion durch die Lichtabgabevorrichtung vor der eigentlichen, vom Zahnarzt bewusst gestarteten Aushärtung erfolgt.

Als Sicherungsmittel des Handgriffs 30, 60 ist auch vorgesehen, die Lichtabgabevorrichtung 33, 63 beweglich, zum Beispiel drehbar, klappbar oder verschiebbar am Handgriff 30, 60 anzubringen. Die Lichtabgabevorrichtung 33, 63 kann somit zwischen einer ersten Position, in der die Lichtabgabe auf die Füllmasse für den Anwender zumindest erschwert oder unmöglich gemacht ist bzw. die auf die Füllmasse auftreffende Strahlungsleistung wie oben beschrieben verringert ist, und einer zweiten Position, in der das Anvisieren und Zielen mit der Lichtabgabevorrichtung 33, 63 und die Abgabe der Strahlung auf die Füllmasse begünstigt und vereinfacht ist, so dass eine zum Aushärten ausreichende Strahlungsleistung auf die Füllmasse auftrifft, bewegt werden. In den Ausführungsformen der Figuren 5 - 10 ist die als LED 44, 84 ausgeführte Lichtabgabevorrichtung 33, 63 auf einer Trägervorrichtung, zum Beispiel einem stabförmigen Träger 57, 88 befestigt, der verschiebbar am Handgriff 30, 60 angeordnet ist. Im Bereich des zweiten Endes 49, 79 ist ein Zwischenraum zwischen der Außenhülse 48, 78 und den im Inneren des Handgriffs 30, 60 aufgenommenen Bauteilen vorgesehen, so dass der stabförmige Träger 57, 88 in diesen Zwischenraum einführbar ist. LED 44, 84 ist somit in einer ersten, in den Figuren 6 und 9 dargestellten Position anordenbar, in der sie sich im Wesentlichen am ersten Ende 35, 65 des Handgriffs 30, 60 befindet und in der der Anwender die in einer Zahnkavität eingebrachte Füllmasse einfach und mit einer ausreichenden Strahlungsleistung aushärten kann, bzw. in einer zweiten, in den Figuren 7 und 10 dargestellten Position anordenbar, in der sie vom ersten Ende 35, 65 des Handgriffs 30, 60 entfernt ist, so dass die Aushärtung der Füllmasse für den Anwender erschwert ist.

Ein weiteres Sicherungsmittel des Handgriffs 30, 60 umfasst eine Vorrichtung 38, 68, insbesondere eine Schaltvorrichtung 38A, 68A, die so ausgebildet ist, dass wahlweise nur der Schwingungserreger 47, 47A, 77, 77A oder die Lichtabgabevorrichtung 33, 63 betreibbar sind. Bevorzugt weist die Schaltvorrichtung 38A, 68A zumindest ein gemeinsames Schaltglied 39, 69 für den Schwingungserreger 47, 77 und die Lichtabgabevorrichtung 33, 63 auf, wobei das Schaltglied 39, 69 insbesondere als Kulissenelement 40, 70 mit einem Führungsschlitz 74 ausgebildet ist.

Das Schaltglied 39, 69 umfasst elektrische Kontakte, die mit der Lichtabgabevorrichtung 33, 63 in Form einer Lichtquelle 44, 84, insbesondere zumindest einer LED über elektrische Leitungen verbunden oder verbindbar sind und diese mit Strom versorgen. Das Schaltglied 39, 69 ist zwischen zumindest zwei Positionen beweglich, zum Beispiel verschiebbar, verdrehbar oder verschwenkbar am Handgriff 30, 60 befestigt, wobei das Schaltglied 39, 69 und die elektrischen Kontakte so ausgebildet und / oder angeordnet sind, dass sie mit den zumindest zwei elektrischen Kontakten des Kupplungselements 34, 64 in einer der beiden Positionen verbunden sind und in der anderen der beiden Positionen von diesen Kontakten getrennt sind, so dass durch Betätigung des Schaltglieds 39, 69 die Lichtabgabevorrichtung 33, 63 ein- bzw. ausschaltbar ist.

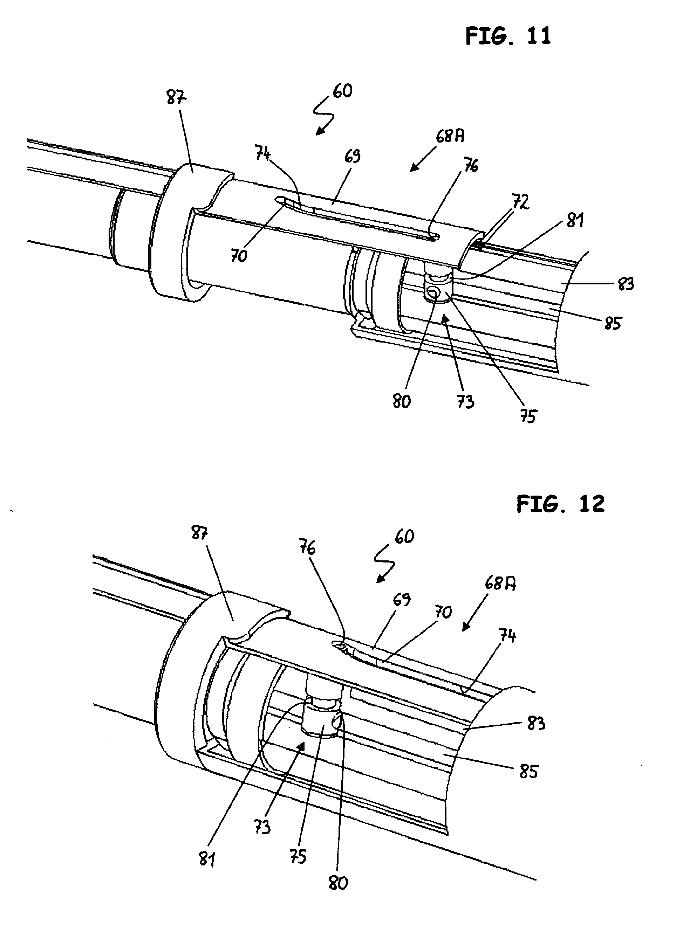

Um der Lichtabgabevorrichtung 33, 63 den benötigten Betriebsstrom zur Verfügung zu stellen, ist im Handgriff 30, 60 eine elektrische Versorgungseinheit 54, 83 vorgesehen. Diese enthält bekannte elektrische oder elektronische Bauteile wie Transformatoren, Dioden etc., um den von der Energiequelle erhaltenen Strom, insbesondere die Stromstärke, Spannungsart oder -höhe etc. für die Lichtabgabevorrichtung 33, 63 aufzubereiten. Wie insbesondere aus den Figuren 11 und 12 erkennbar ist, kann die Versorgungseinheit 54, 83 auch elektrische Schaltkontakte 72 enthalten, über die mit den elektrischen Schaltkontakten des Schaltglieds 39, 69 die Stromversorgung der Lichtabgabevorrichtung 33, 63 ein- bzw. ausschaltbar ist. Gemäß den Ausführungsformen der Figuren 6, 7 und 9, 10 sind die elektrischen Schaltkontakte 72 dabei an dem dem ersten Ende 35, 65 des Handgriffs 30, 60 zugewandten Ende der Versorgungseinheit 54, 83 angeordnet und die Schaltkontakte des Schaltglieds 39, 69 an dem dem zweiten Ende 49, 79 des Handgriffs 30, 60 zugewandten Ende des Schaltglieds 39, 69. In den Figuren 6, 9 und 11 nimmt das Schaltglied 39, 69 eine in Richtung des ersten Endes 35, 65 verschobene Position ein, so dass die Schaltkontakte des Schaltglieds 39, 69 über den Kontakten 72 angeordnet sind, mit diesen in Kontakt stehen und der Stromkreis zur Lichtabgabevorrichtung 33, 63 geschlossen ist. In dieser Position ist auch die Lichtabgabevorrichtung 33, 63, die vorteilhafter Weise mit dem Schaltglied 39, 69 verbunden ist, nach vorne, an das erste Ende 35, 65 des Handgriffs 30, 60 verschoben, so dass eine für den Anwender optimale Handhabung des Handgriffs 30, 60 während des Aushärtens gewährleistet ist.

In den Figuren 7, 10 und 12 nimmt das Schaltglied 39, 69 eine in Richtung des zweiten Endes 49, 79 verschobene Position ein, so dass die Schaltkontakte des Schaltglieds 39, 69 von den Kontakten 72 entfernt sind und der Stromkreis zur Lichtabgabevorrichtung 33, 63 unterbrochen ist. Gleichzeitig ist auch die Lichtabgabevorrichtung 33, 63 in Richtung des zweiten Endes 49, 79 verschoben.

Schaltvorrichtung 38A, 68A mit Schaltglied 39, 69 ist des Weiteren so ausgebildet, dass über das Schaltglied 39, 69 ein Sperrelement, bevorzugt ein Ventil 43, 73 bedienbar ist, das die Versorgung von Schwingungserreger 47, 77 mit einem Antriebsmedium unterbricht. In den in den Figuren 6, 7, 9, 10 und 11, 12 dargestellten Ausführungsbeispielen wird der Schwingungserreger 47A, 77A über eine Fluidleitung 45, 85 mit Druckluft versorgt. Wie insbesondere aus Figur 3 zu erkennen ist umfasst das Ventil 43, 73 einen zylindrischen, drehbar im Handgriff 30, 60 angeordneten Ventilkörper 75 mit einer Durchgangsbohrung 55, 80 und einem exzentrisch am Ventilkörper 75 befestigten Stift 76, der in Schlitz 74 des Schaltglieds 39, 69 aufgenommen ist. Führungsschlitz 74 ist gewinkelt oder gebogen ausgeführt, so dass durch das Verschieben des Schaltglieds 39, 69 der Ventilkörper 75 über den Exzenterstift 76 verdreht wird, um eine erste Position einzunehmen, in der Bohrung 55, 80 mit Fluidleitung 45, 85 fluchtet, so dass die Druckluft das Ventil 43, 73 in Richtung Schwingungserreger 47A, 77A passieren kann (siehe Figur 12), oder um eine zweite Position einzunehmen, in der Bohrung 55, 80 von Fluidleitung 45, 85 abgewandt ist, so dass die Verbindung zwischen der Druckluftquelle und dem Schwingungserreger 47A, 77A unterbrochen ist (siehe Figur 11). Zur Aufnahme von Dichtelementen, insbesondere O-Ringen sind am Ventilkörper 75 eine oder mehrere Nuten 81 vorgesehen.

Führungsschlitz 74 ist so ausgebildet und / oder am Schaltglied 39, 69 angeordnet, dass in jener Position, in der das Schaltglied 39, 69 so verschoben ist, dass der Stromkreis zur Lichtabgabevorrichtung 33, 63 geschlossen ist, die Bohrung 55, 80 von Fluidleitung 45, 85 abgewandt ist, so dass die Verbindung zwischen der Druckluftquelle und dem Schwingungserreger 47A, 77A unterbrochen ist bzw. dass in jener Position, in der das Schaltglied 39, 69 so verschoben ist, dass der Stromkreis zur Lichtabgabevorrichtung 33, 63 geöffnet ist, die Bohrung 55, 80 der Fluidleitung 45, 85 zugewandt ist, so dass die Verbindung zwischen der Druckluftquelle und dem Schwingungserreger 47A, 77A durchgängig ist. Schaltvorrichtung 38, 38A, 68, 68A ist somit so ausgebildet, dass wahlweise entweder der Schwingungserreger 47A, 77A oder die Lichtabgabevorrichtung 33, 63 aktiv sind. Insbesondere bei Verwendung hochviskoser Füllmassen, die ohne Betrieb eines Schwingungserregers 47A, 77A nur sehr schwer in eine Zahnkavität einbringbar sind, ist somit ausreichend gewährleistet, dass entweder nur die Füllmasse aus dem Behältnis 32, 62 ausgebracht oder die Lichtabgabevorrichtung 33, 63 betrieben wird.

Zur einfachen Bedienung ist Schaltglied 39, 69 mit einem Stellorgan 56, 87 verbunden. Stellorgan 56 kann unterschiedlichste Ausformungen aufweisen, zum Beispiel eine verschiebbare, den Handgriff 30, 60 zur Gänze oder teilweise umgebende Hülse.

Anstelle der bisher beschriebenen Ventile 43, 73 können selbstverständlich auch andere Sperrelemente wie zum Beispiel Schieber oder Klappen, insbesondere andere elektrische oder mechanische Ventile verwendet werden. Figur 4 zeigt beispielhaft ein derartiges Ventil, das als Kugelventil 110 ausgebildet ist. Druckluftleitung 111 hat zwei Abschnitte mit unterschiedlichen Durchmessern, die durch einen sich verjüngenden, eine Schulter 114 bildenden Abschnitt verbunden sind. In der Druckluftleitung 111 wird ein Ventilkörper 112, der zum Beispiel als Kugel ausgestaltet ist, durch eine Feder 113 gegen die Schulter 114 gedrückt, so dass die Druckluftleitung 111 verschlossen ist und keine Druckluft zum Schwingungserreger und / oder zur Fördervorrichtung gelangt. Durch Betätigen eine Schaltvorrichtung, zum Beispiel Schaltvorrichtung 38A, 68A, verschiebt ein in der Druckluftleitung 111 angeordneter Kolben 115 den Ventilkörper 112 gegen die Federkraft von Feder 113, so dass der Ventilkörper 112 von der Schulter 114 beabstandet ist und Druckluft den Ventilkörper 112 passieren kann.

Im Folgenden werden die bei den Handgriffen 30, 60 unterschiedlich ausgeführten Bauteile beschrieben.

Handgriff 30 umfasst eine Fördervorrichtung 41 zur Förderung der Füllmasse aus dem Behältnis 32 in Richtung der oder in die Zahnkavität. Fördervorrichtung 41 weist ein Förderelement 42, zum Beispiel einen Kolben, Schaft, Stößel oder Stempel auf, das beweglich am Handgriff 30 angeordnet ist. Das Füllmassebehältnis 32 hat einen Innenraum, in dem die Füllmasse aufgenommen ist, eine Abgabeöffnung 37, durch die die Füllmasse austreten kann, und eine bewegbare, verschiebbare Rückwand. Wird die Fördervorrichtung 41 betrieben, so wandert Förderelement 42 in Richtung der Anschlussvorrichtung 31, bis sie die Rückwand des Füllmassebehältnisses 32 erreicht. Durch das weitere Vorwärtstreiben des Förderelements 42 wird die Rückwand ebenfalls in Richtung der Abgabeöffnung 37 verschoben, wodurch die Füllmasse aus dem Behältnis 32 gedrückt wird.

Die Bewegung des Förderelements 42 erfolgt bei dem Handgriff 30 manuell, also durch den Anwender. Dazu ist Förderelement 42 mit einem Stellelement 58 verbunden, das für den Anwender bedienbar am Handgriff 30 angebracht ist. Stellelement 58 ist als Schieber ausgeführt, der über eine Hülse mit dem Förderelement 42 verbunden ist. Stellelement 58 kann jedoch auch andere Formen aufweisen und zum Beispiel als schwenkbarer Hebel oder Drehknopf ausgebildet sein.

Der in den Figuren 8 - 10 dargestellte Handgriff 60 weist im Unterschied dazu eine durch eine Energiequelle betriebene Fördervorrichtung 71 auf, die bevorzugt als fluidbetriebene Fördervorrichtung 71A ausgebildet ist. Als Antriebsfluid können zum Beispiel Wasser oder Druckgas, bevorzugt Druckluft verwendet werden, die von externen Medienquellen zur Verfügung gestellt werden. Die Fördervorrichtung 71, 71A umfasst ein durch das Fluid in Richtung der Anschlussvorrichtung 61 verschiebbares Förderelement 82, zum Beispiel einen Kolben, Schaft, Stößel oder Stempel, das beweglich am Handgriff 60 angeordnet ist. Die Rückstellung des Förderelements 82 von der in Figur 9 dargestellten, am weitesten in das Behältnis 62 eingedrungene Position in die in Figur 10 dargestellte Ausgangsposition kann selbsttätig durch ein Federelement oder durch ein vom Anwender zu betätigendes Stellorgan erfolgen. Die Förderung der Füllmasse aus dem Behältnis 62 erfolgt in gleicher Weise wie weiter oben für den Handgriff 30 beschrieben.

Besonders bevorzugt wird der Schwingungserreger 77, 77A des Handgriffs 60 mit dem gleichen Fluid betrieben wie die Fördervorrichtung 71, 71A. Daraus resultiert ein besonders vorteilhafter, einfacher Aufbau des Handgriffs 60, der zum Beispiel eine gemeinsame Fluidleitung 85 für den Schwingungserreger 77A und die Fördervorrichtung 71, 71A umfasst. Zusätzlich kann der Schwingungserreger 77, 77A direkt oder indirekt mit der Fördervorrichtung 71, 71A verbunden sein. Es wird dann zumindest ein Teil des Fluids zum Betrieb des Schwingungserregers 77, 77A und der Fördervorrichtung 71, 71A verwendet, zum Beispiel vom Schwingungserreger 77, 77A zur Fördervorrichtung 71, 71A weitergeleitet, so dass das Fluid Druck auf die Fördervorrichtung 71, 71A ausübt und sie antreibt. Der Vorteil dieser Ausführungsform besteht insbesondere darin, dass sicher gestellt ist, dass immer, wenn Füllmasse gefördert wird, die Füllmasse mit Schwingung beaufschlagt wird, so dass eine optimale Förderung, Abgabe, Einbringung in die Kavität und Formung der Füllmasse gewährleistet ist.

Die Verbindung zwischen dem Schwingungserreger 77, 77A und der Fördervorrichtung 71, 71A kann zumindest die hohle Schwingachse 86 umfassen, durch deren Innenraum der die Fördervorrichtung 71, 71A antreibende Fluidanteil zur Fördervorrichtung 71, 71A leitbar ist. Die Schwingachse 86 mündet in eine Kammer 89, in der zumindest ein Teil der Fördervorrichtung 71, 71A, zum Beispiel ein Teil der Kolbenstange und der Kolbenkopf beweglich angeordnet sind. Schwingungserreger 77, 77A mit der hohlen Schwingachse 86 und Fördervorrichtung 71, 71A sind entlang einer gemeinsamen Achse angeordnet. Fördervorrichtung 71, 71A, insbesondere Förderelement 82 ist bevorzugt zentrisch im Handgriff 60 angeordnet.

Aus diesem Aufbau ergibt sich des Weiteren, dass die oben bereits beschriebene Schaltvorrichtung 68, 68A, insbesondere Ventil 73 neben dem Ein- bzw. Ausschalten des Schwingungserregers 77, 77A und der Lichtabgabevorrichtung 63 auch die Fördervorrichtung 71, 71A aktiviert bzw. stoppt, in dem es die Druckluftzufuhr durch Leitung 85 öffnet bzw. schließt. Damit ist in vorteilhafter Weise eine Förderung der Füllmasse bei Aktivierung der Lichtabgabevorrichtung 63 vollständig ausgeschlossen.

In den Figuren 13 - 15 sind die ersten Enden 95A, 95B, 95C dreier dentaler Handgriffe 90A, 90B, 90C dargestellt. Die Handgriffe 90A, 90B, 90C gleichen in ihrem Aufbau den Handgriffen 30, 60: Sie weisen eine am ersten Ende 95A, 95B, 95C angeordnete Lichtabgabevorrichtung 93A, 93B, 93C auf, die zumindest eine LED 94A, 94B, 94C und zumindest eine Lichtabgabefläche 96A, 96B, 96C zur gerichteten Strahlungsabgabe auf die Präparationsstelle, insbesondere auf die zu härtende Füllmasse umfasst, und eine Anschlussvorrichtung 91A, 91B, 91 C, an die ein Behältnis 92A, 92B, 92C für die Füllmasse anschließbar oder angeschlossen ist. Bevorzugt umfasst die Anschlussvorrichtung 91A, 91B, 91 C wiederum eine Sonotrode 97A, 97B, 97C.

Zusätzlich sind an den ersten Enden 95A, 95B, 95C der Handgriffe 90A, 90B, 90C Sonden 98A, 98B, 98C vorgesehen, die insbesondere zum Verdichten und Formen der Füllmasse vor dem Aushärten dienen. Die Sonden 98A, 98B, 98C sind bevorzugt derart auf den Handgriffen 90A, 90B, 90C angeordnet, dass die Füllmasse in den Zahnkavitäten mit den Sonden 98A, 98B, 98C gut zugänglich ist, ohne dass dabei andere Bauteile der Handgriffe 90A, 90B, 90C die Handhabung der Sonden 98A, 98B, 98C stören oder einschränken. Besonders bevorzugt sind die Sonden 98A, 98B, 98C dazu auf einer Trägervorrichtung befestigt, insbesondere auf dem stabförmigen Träger 99A, 99B, 99C auf dem auch die Lichtabgabevorrichtung 93A, 93B, 93C befestigt ist.

Die Sonden 98A, 98B, 98C weisen einen Verbindungsteil 100A, 100B, 100C zur Verbindung mit den Handgriffen 90A, 90B, 90C und einen Arbeitsteil 101A, 101B, 101 C auf. Insbesondere die Arbeitsteile 101A, 101B, 101C können unterschiedliche Geometrien aufweisen: Der an den zylindrischen Verbindungsteil 100A anschließende spachtelförmige Arbeitsteil 101A von Sonde 98A ist im Wesentlichen quaderförmig ausgebildet und weist am Vorderende einen keilförmigen, sich verjüngenden Abschnitt auf. Arbeitsteil 101 B von Sonde 98B hat eine runde, halbkugelförmige Form, Arbeitsteil 101C von Sonde 98C ist als im Wesentlichen plane Ebene gestaltet. Abhängig von den mit den Sonden durchzuführenden Arbeiten und den Präferenzen der Anwender sind selbstverständlich auch andere geometrische Ausformungen der Arbeitsteile der Sonden möglich. Bevorzugt sind die Sonden 98A, 98B, 98C lösbar mit den Handgriffen 90A, 90B, 90C, insbesondere den Trägervorrichtungen verbunden, so dass sie vom Anwender ausgetauscht werden können.

Handgriffe 90A, 90B, 90C können somit in vorteilhafter Weise zur Durchführung von drei Funktionen verwendet werden, nämlich zum Einfüllen von Füllmasse in eine Kavität, zur Nachbehandlung der Füllmasse mit den Sonden 98A, 98B, 98C und zum Aushärten der Füllmasse.

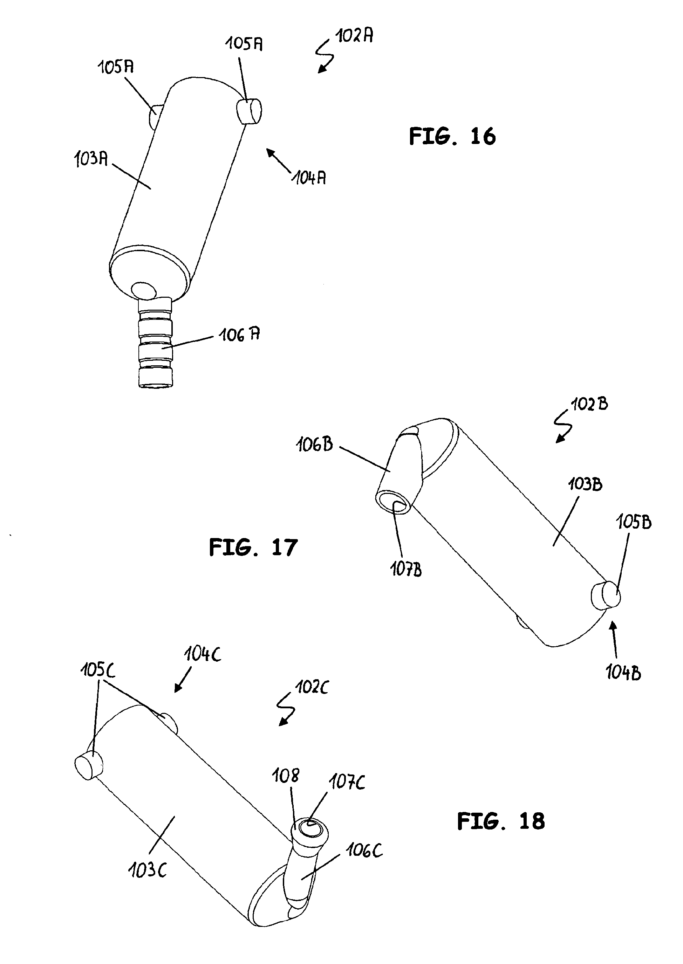

Die Figuren 16 - 18 zeigen Füllmassebehältnisse 102A, 102B, 102C, die mit den Handgriffen 10, 30, 60, 90 verbindbar sind. Die Füllmassebehältnisse 102A, 102B, 102C bestehen aus einem Körper 103A, 103B, 103C der innen einen Hohlraum aufweist, in dem die Füllmasse aufgenommen ist. An einem Ende des Körpers 103A, 103B, 103C befindet sich eine Anschlussvorrichtung 104A, 104B, 104C zur Verbindung des Behältnisses 102A, 102B, 102C mit einem dentalen Handgriff 10, 30, 60, 90. Die Anschlussvorrichtung 104A, 104B, 104C umfasst zwei Fortsätze 105A, 105B, 105C, die in eine Bajonettverbindung der dentalen Handgriffe 10, 30, 60, 90 einsetzbar sind. Die Anschlussvorrichtung 104A, 104B, 104C kann jedoch auch andere Ausgestaltungen annehmen, zum Beispiel als ringförmiger Flansch oder als Rücksprung.

An den Körper 103A, 103B, 103C schließt ein Abgaberohr oder eine Kanüle 106A, 106B, 106C an, durch die die Füllmasse gezielt in die Kavität einbringbar ist. Üblicherweise steht die Kanüle in einem Winkel von etwa 45° - bezogen auf die Längsachse des Füllmassebehältnisses 102A, 102B, 102C - vom Körper ab. Damit sind jedoch insbesondere Kavitäten von weiter hinten im Mundraum angeordneten Zähnen nur schlecht zu befüllen. Der Winkel von 45° ist jedoch notwendig, da ansonsten die sehr zähflüssigen Füllmassen nicht zuverlässig und gleichmäßig aus den Füllmassebehältnissen 102A, 102B, 102C förderbar sind.

Überraschenderweise wurde in Versuchen jedoch festgestellt, dass bei Verwendung von Handgriffen mit Schwingungserreger, wie sie zum Beispiel in der Beschreibung zu den Figuren 5 - 10 dargestellt sind, die Viskosität der Füllmasse derart abnimmt, dass die Abgaberohre 106A, 106B, 106C auch in anderen Winkeln zwischen 45° bis etwa 90° am Körper 103A, 103B, 103C befestigbar sind. Dies erleichtert das Einbringen der Füllmasse in die Kavitäten für den Anwender erheblich.

Die Figuren 17, 18 zeigen zwei Füllmassebehältnisse 102B, 102C mit etwa mit 90° angeordneten Abgaberohren 106B, 106C. Abgaberohr 106B ist vergleichsweise kurz, so dass es nur wenig, etwa 2,0 - 3,0 mm über den Körper 103B ragt, und weist eine große Abgabeöffnung 107B mit einem Durchmesser von etwa 2,7 - 3,4 mm auf. Füllmassebehältnis 102B kann dem entsprechend vor allem zur Füllung größerer, flächiger Kavitäten verwendet werden.

Abgaberohr 106C ist länger und ragt etwa 4,0 - 6,0 mm über den Körper 103C. Der Durchmesser der Abgabeöffnung 107C beträgt etwa 1,3 - 1,8 mm. Füllmassebehältnis 102C kann daher für kleine oder tiefer ausgebildete Kavitäten verwendet werden. Zusätzlich ist das Vorderende des Abgaberohrs 106C verdickt, mit einem in Richtung der Abgabeöffnung 107C zunehmenden Durchmesser ausgestaltet. Dieser Stempel 108 dient insbesondere der Verdichtung und Formung der in die Zahnkavität eingebrachten Füllmasse.

Abgaberohr 106A von Füllmassebehältnis 102A ist biegsam ausgebildet, so dass es in vorteilhafter Weise verschiedene Winkel - in Bezug auf die Längsachse des Füllmassebehältnisses 102A - einnehmen kann. Dies erleichtert das Einbringen der Füllmasse in die Zahnkavität für den Anwender zusätzlich und erspart dem Hersteller die Produktion unterschiedlicher Füllmassebehältnisse mit unterschiedlich gewinkelten Abgaberohren. Die Biegsamkeit oder Verformbarkeit des Abgaberohrs 106A kann durch unterschiedlichste Maßnahmen erreicht werden, zum Beispiel durch die Herstellung zumindest des Abgaberohrs 106A aus biegsamen Material wie Kunststoff, insbesondere aus Polyamid, oder durch den Aufbau des Abgaberohrs 106A, insbesondere dadurch, dass das Abgaberohr 106A unterschiedliche Wandstärken aufweist, so wie dies in Figur 16 dargestellt ist, oder dass ein biegsames Innenrohr mit einem spiralförmigen, federnden Stützelement umgeben ist oder dass das Abgaberohr 106A einen faltenbalg-ähnlichen Aufbau aufweist.

In den Figuren 19 - 21 sind drei Schwingungsüberträger oder Sonotroden 116A, 116B, 116C abgebildet, die zum Beispiel als Teil der Anschlussvorrichtungen 31, 60 der Handgriffe 30, 60 einsetzbar sind. Die Sonotroden 116A, 116B, 116C umfassen eine Aufnahme, in die ein Füllmassebehältnis einsetzbar ist. Die Aufnahme ist insbesondere als längliche Aufnahme 117A, 117B, 117C mit einer Basis 118A, 118B, 118C und einem darum verlaufenden Rand 119A, 119B, 119C ausgeführt.

An einem Ende der Sonotroden 116A, 116B, 116C befindet sich eine Anschlussvorrichtung 120A, 120B, 120C zur Verbindung der Sonotroden 116A, 116B, 116C mit einem dentalen Handgriff 10, 30, 60, 90. Die Anschlussvorrichtung 120A, 120B, 120C umfasst zwei Fortsätze 121A, 121B, 121C, die in eine Bajonettverbindung der dentalen Handgriffe 10, 30, 60, 90 einsetzbar sind. Die Anschlussvorrichtung 120A, 120B, 120C kann jedoch auch anders ausgeführt sein, zum Beispiel als Steck-, Klemm- oder Schraubverbindung.

Jede Basis 118A, 118B, 118C ist in einen ersten und zweiten Abschnitt unterteilt, deren Innendurchmesser bzw. deren Wandstärken unterschiedlich sind und die durch eine Stufe 122A, 122B, 122C verbunden sind. Um eine gute Förderbarkeit der Füllmasse, insbesondere beim Austritt aus den Füllmassebehältnissen zu bewirken, ist eine möglichst effiziente Übertragung der Schwingungen auf die Füllmasse notwendig, die durch einen engen, festen Kontakt zwischen den Sonotroden 116A, 116B, 116C und den Füllmassebehältnissen erreicht wird. Dieser enge Kontakt wird insbesondere im Abschnitt 123A, 123B, 123C mit dem geringeren Innendurchmesser sichergestellt, wobei der Innendurchmesser oder die Innenabmessung des Abschnitts 123A, 123B, 123C gleich oder sogar etwas geringer ist, als ein mit der Sonotrode 116A, 116B, 116C verwendbares Füllmassebehältnis.

An den Abschnitt 123A, 123B, 123C schließt ein Rohr 124A, 124B, 124C an, in das ein Abgaberohr oder eine Kanüle eines Füllmassebehältnis einführbar ist. Entsprechend den oben angeführten unterschiedlichen Ausführungsformen der Kanüle sind auch die Rohre 124A, 124B, 124C unterschiedlich ausgebildet und haben insbesondere eine unterschiedliche Länge, einen unterschiedlichen Durchmesser oder einen unterschiedlichen Neigungswinkel, insbesondere zwischen 45° bis in etwa 90° in Bezug auf die Längsachse der Sonotroden 116A, 116B, 116C. Das Rohr 124A, 124B, 124C kann an seinem freien Ende ebenfalls Verstärkungen oder Verdickungen zum Verdichten der Füllmasse haben.

Die Erfindung ist nicht auf das dargestellte Anwendungsgebiet und das beschriebene Ausführungsbeispiel beschränkt, sondern umfaßt alle Ausführungsmöglichkeiten, die das prinzipielle, sinngemäße Funktionsprinzip der Erfindung nicht verändern. So kann der Schwingungserreger auch als elektrisch betriebener Schwingungserreger ausgebildet sein, zum Beispiel als Piezoelement oder als magnetostriktives Element. Umfasst die Lichtabgabevorrichtung eine im Handgriff angeordnete Lichtquelle, insbesondere ein optisches Halbleiterelement, so können des Weiteren in einem bevorzugten Ausführungsbeispiel der Schwingungserreger und die Lichtquelle mit einer gemeinsamen Energiequelle verbunden sein. Gegebenenfalls sind dann zwei Schaltungen notwendig, um dem elektrisch betriebenen Schwingungserreger und der Lichtquelle die unterschiedlichen benötigten Stromparameter zur Verfügung stellen zu können.

## Patentansprüche

1. Dentaler Handgriff (60, 90) zur Abgabe von Füllmasse in eine Zahnkavität mit einer Anschlussvorrichtung (61, 91), an die ein Behältnis (62, 92) für die Füllmasse anschließbar oder angeschlossen ist, mit einer fluidbetriebenen Fördervorrichtung (71, 71A) zur Förderung der Füllmasse aus dem Füllmassebehältnis (62, 92), mit einem Schwingungserreger (77), der direkt oder indirekt mit der Anschlussvorrichtung (61, 91) verbindbar oder verbunden ist, so dass die vom Schwingungserreger (77) erzeugte Schwingung auf die Füllmasse übertragbar ist, wobei der Schwingungserreger (77) als fluidbetriebener Schwingungserreger (77A) ausgebildet ist, und mit einem Kupplungselement (64) zur Verbindung der Fördervorrichtung (71, 71A) mit einer externen Fluidquelle, wobei das Kupplungselement (64) derart ausgebildet ist, dass es an ein Gegenkupplungselement, das zum Anschluss an ein dentales Handinstrument mit einer anderen Funktion vorgesehen ist, kuppelbar ist, **dadurch gekennzeichnet, dass**
der fluidbetriebene Schwingungserreger (77A) eine hohle Schwingachse (86) umfasst, dass die Anschlussvorrichtung (61, 91) eine Sonotrode (50) oder einen Schwingungsüberträger (116A, 116B, 116C) umfasst, in welche das Füllmassebehältnis (62, 92) einsetzbar, einsteckbar oder in sonstiger Weise befestigbar ist, und dass die Fördervorrichtung (71, 71A) ein durch das Fluid in Richtung der Anschlussvorrichtung (61, 91) verschiebbares Förderelement (82) umfasst, das zumindest teilweise in der Sonotrode (50) oder in dem Schwingungsüberträger (116A, 116B, 116C) aufgenommen ist.

2. Dentaler Handgriff (60, 90) nach Anspruch 1, **dadurch gekennzeichnet, dass** eine gemeinsame Fluidleitung (85) für den Schwingungserreger (77, 77A) und die Fördervorrichtung (71, 71A) vorgesehen ist.

3. Dentaler Handgriff (60, 90) nach Anspruch 1 oder 2, **dadurch gekennzeichnet, dass** der Schwingungserreger (77, 77A) und die Fördervorrichtung (71, 71A) direkt oder indirekt miteinander verbunden sind, so dass zumindest ein Teil des Fluids zum Betrieb der Fördervorrichtung (71, 71A) und des Schwingungserregers (77, 77A) nutzbar ist.

4. Dentaler Handgriff (60, 90) nach einem der vorhergehenden Ansprüche, **dadurch gekennzeichnet, dass**
die Schwingachse (86) in eine Kammer (89) mündet, in der zumindest ein Teil der Fördervorrichtung (71, 71A), zum Beispiel ein Teil einer Kolbenstange und ein Kolbenkopf, beweglich angeordnet ist.

5. Dentaler Handgriff (60, 90) nach einem der vorhergehenden Ansprüche, **dadurch gekennzeichnet, dass**
der Schwingungserreger (77, 77A) mit der hohlen Schwingachse (86) und die Fördervorrichtung (71, 71A) entlang einer gemeinsamen Achse angeordnet sind.

6. Dentaler Handgriff (60, 90) nach einem der vorhergehenden Ansprüche, **dadurch gekennzeichnet, dass**
eine Drehhülse (51) über Bohrungen in der hohlen Schwingachse (86) angeordnet ist, welche durch austretende Druckluft derart in Rotation versetzbar ist, dass die hohle Schwingachse (86) in Vibration versetzt wird.

7. Dentaler Handgriff (60, 90) nach Anspruch 6, **gekennzeichnet durch** im Inneren des Handgriffs (60, 90) vorgesehene Zwischenräume oder Leitungen zum Fließen der **durch** die Bohrungen ausgetretenen Druckluft in Richtung des Kupplungselements (64).

8. Dentaler Handgriff (60, 90) nach einem der vorhergehenden Ansprüche, **dadurch gekennzeichnet, dass**
durch einen Innenraum der hohle Schwingachse (86) der die Fördervorrichtung (71, 71 A) antreibende Fluidanteil zur Fördervorrichtung (71, 71 A) leitbar ist.

9. Dentaler Handgriff (60, 90) nach einem der vorhergehenden Ansprüche, **dadurch gekennzeichnet, dass**
ein Sperrelement, zum Beispiel ein Sperrventil (73), zur Unterbrechung der Fluidförderung zur Fördervorrichtung (71, 71A) und / oder zum Schwingungserreger (77, 77A) vorgesehen ist.

10. Dentaler Handgriff (60, 90) nach einem der vorhergehenden Ansprüche, **gekennzeichnet durch**
eine Lichtabgabevorrichtung (63, 93) über die Strahlung mit einer Wellenlänge und Strahlungsleistung zum Aushärten von Füllmaterial bereitstellbar ist.

11. Dentaler Handgriff (60, 90) nach einem der vorhergehenden Ansprüche, **gekennzeichnet durch**
eine mit dem Handgriff (60, 90) verbundene oder verbindbare, **durch** den Schwingungserreger (77, 77A) in Schwingung versetzbare Sonde (8, 98A, 98B, 98C).

12. Dentaler Handgriff (60, 90) nach einem der vorhergehenden Ansprüche, **gekennzeichnet durch**
ein Federelement oder ein vom Anwender betätigbares Stellorgan zur Rückstellung des Förderelements (82).

13. Dentaler Handgriff (60, 90) nach Anspruch 10, **gekennzeichnet durch**
Sicherungsmittel zur Verhinderung einer verfrühten oder versehentlichen Lichtabgabe auf die Füllmasse.

14. Dentaler Handgriff (60, 90) nach einem der vorhergehenden Ansprüche, **dadurch gekennzeichnet, dass**
die Sonotrode (50) oder der Schwingungsüberträger (116A, 116B, 116C) eine Aufnahme umfassen, in die ein Füllmassebehältnis (62, 92) einsetzbar ist, wobei die Aufnahme insbesondere als längliche Aufnahme (117A, 117B, 117C) mit einer Basis (118A, 118B, 118C) und einem darum verlaufenden Rand (119A, 119B, 119C) ausgeführt ist.

15. Dentaler Handgriff (60, 90) nach einem der vorhergehenden Ansprüche, **gekennzeichnet durch**
ein Füllmassebehältnis (62, 92), das einen Innenraum, in dem die Füllmasse aufgenommen ist, eine Abgabeöffnung (67), **durch** die die Füllmasse austreten kann, und eine bewegbare, verschiebbare Rückwand hat, wobei bei Betrieb der Fördervorrichtung (71, 71 A) **durch** das Vorwärtstreiben des Förderelements (82) die Rückwand in Richtung der Abgabeöffnung (67) verschoben wird, wodurch die Füllmasse aus dem Füllmassebehältnis (62, 92) gedrückt wird.

## Claims

1. A dental handgrip (60, 90) for delivering filling compound into a tooth cavity with a connection device (61, 91), to which a container (62, 92) for the filling compound can be or is connected, with a fluid-operated feeding device (71, 71A) for feeding the filling compound from the filling compound container (62, 92), with a vibration generator (77), which can be or is connected directly or indirectly to the connection device (61, 91), so that the vibration generated by the vibration generator (77) can be transmitted to the filling compound, wherein the vibration generator (77) is designed as a fluid-operated vibration generator (77A), and with a coupling element (64) for the connection of the feeding device (71, 71 A) to an external fluid source, wherein the coupling element (64) is designed such that it can be coupled to a counter-coupling element, which is provided for the connection to a dental hand-held instrument with another function, **characterized in that**
the fluid-operated vibration generator (77A) comprises a hollow vibration shaft (86), **in that** the connection device (61, 91) comprises a sonotrode (50) or a vibration transmitter (116A, 116B, 116C), into which the filling compound container (62, 92) can be inserted, plugged in or fixed in some other way and **in that** the feeding device (71, 71A) comprises a feeding element (82) which can be moved by the fluid in the direction of connection device (61, 91) and which is received at least partially in the sonotrode (50) or in the vibration transmitter (116A, 116B, 116C).

2. The dental handgrip (60, 90) according to claim 1, **characterized in that** a common fluid line (85) is provided for the vibration generator (77, 77A) and the feeding device (71, 71 A).

3. The dental handgrip (60, 90) according to claim 1 or 2, **characterized in that** the vibration generator (77, 77A) and the feeding device (71, 71A) are connected to one another directly or indirectly, so that at least a part of the fluid can be used for the operation of the feeding device (71, 71 A) and the vibration generator (77, 77A).

4. The dental handgrip (60, 90) according to one of the preceding claims, **characterized in that**
the vibration shaft (86) leads into a chamber (89), in which at least a part of the feeding device (71, 71A), for example a part of a piston rod and a piston head, is movably arranged.

5. The dental handgrip (60, 90) according to one of the preceding claims, **characterized in that**
the vibration generator (77, 77A) with the hollow vibration shaft (86) and the feeding device (71, 71 A) are disposed along a common axis.

6. The dental handgrip (60, 90) according to one of the preceding claims, **characterized in that**
a rotary sleeve (51) is disposed over bores in the hollow vibration shaft (86), which is caused to rotate by exiting compressed air in such a way that the hollow vibration shaft (86) is caused to vibrate.

7. The dental handgrip (60, 90) according to claim 6, **characterized by** intermediate spaces or lines provided in the interior of the handgrip (60, 90) for the flowing of the compressed air which exited through the bores towards the coupling element (64).

8. The dental handgrip (60, 90) according to one of the preceding claims, **characterized in that**
the fluid portion which drives the feeding device (71, 71A) can be routed to the feeding device (71, 71 A) through an internal space of the hollow vibration shaft (86).

9. The dental handgrip (60, 90) according to one of the preceding claims, **characterized in that**
a blocking element, for example a shut-off valve (73), is provided for interrupting the fluid delivery to the feeding device (71, 71A) and/or to the vibration generator (77, 77A).

10. The dental handgrip (60, 90) according to one of the preceding claims, **characterized by**
a light emission device (63, 93) via which radiation with a wavelength and radiant power for the curing of filling material can be provided.

11. The dental handgrip (60, 90) according to one of the preceding claims, **characterized by**
a probe (8, 98A, 98B, 98C) which is or can be connected to the handgrip (60, 90) and which can be caused to vibrate through the vibration generator (77, 77A).

12. The dental handgrip (60, 90) according to one of the preceding claims, **characterized by**
a spring element or an actuating element operated by the user for the reset of the feeding element (82).

13. The dental handgrip (60, 90) according to claim 10, **characterized by** safety means to prevent a premature or inadvertent light emission onto the filling compound.

14. The dental handgrip (60, 90) according to one of the preceding claims, **characterized in that**
the sonotrode (50) or the vibration transmitter (116A, 116B, 116C) comprise a receptacle into which a filling compound container (62, 92) can be inserted, wherein the receptacle is designed in particular as an elongated receptacle (117A, 117B, 117C) with a base (118A, 118B, 118C) and an edge (119A, 119B, 119C) running around it.

15. The dental handgrip (60, 90) according to one of the preceding claims, **characterized by**
a filling compound container (62, 92) which has an interior space in which the filling compound is accommodated, a delivery opening (67) through which the filling compound can exit, and a mobile, displaceable rear wall, wherein when the feeding device (71, 71 A) is operated the rear wall is moved towards the delivery opening (67) through the movement of the feeding element (82), so that the filling compound is pushed out of filling compound container (62, 92).

## Revendications

1. Pièce à main dentaire (60, 90) pour distribuer une matière de remplissage dans une cavité dentaire, comprenant un dispositif de connexion (61, 91), sur lequel un récipient (62, 92) pour la matière de remplissage peut être ou est connecté, un dispositif de débit à entraînement fluidique (71, 71A) pour débiter la matière de remplissage à partir du récipient de matière de remplissage (62, 92), comprenant un générateur d'oscillations (77) qui peut être ou est relié directement ou indirectement au dispositif de connexion (61, 91), de façon à ce que l'oscillation produite par le générateur d'oscillations (77) puisse être transmise à la matière de remplissage, sachant que le générateur d'oscillations (77) est conçu en tant que générateur d'oscillations à entraînement fluidique (77A), et comprenant un élément de couplage (64) pour relier le dispositif de débit (71, 71A) à une source de fluide externe, sachant que l'élément de couplage (64) est ainsi conçu qu'il peut être couplé à un élément de contre-couplage prévu pour la connexion sur un instrument à main dentaire ayant une autre fonction, **caractérisé en ce que**
le générateur d'oscillations (77A) à entraînement fluidique comprend un axe d'oscillation creux (86), que le dispositif de connexion (61, 91) comprend une sonotrode (50) ou un transmetteur d'oscillations (116A, 116B, 116C), dans lequel le récipient de matière de remplissage (62, 92) peut être placé, inséré ou fixé de quelconque manière et que le dispositif de débit (71, 71A) comprend un élément de débit (82) pouvant être poussé par le fluide en direction du dispositif de connexion (61, 91), lequel est reçu au moins partiellement dans la sonotrode (50) ou dans le transmetteur d'oscillations (116A, 116B, 116C).

2. Pièce à main dentaire (60, 90) selon la revendication 1, **caractérisée en ce qu'**une conduite de fluide commune (85) est prévue pour le générateur d'oscillations (77, 77A) et le dispositif de débit (71, 71A).

3. Pièce à main dentaire (60, 90) selon la revendication 1 ou 2, **caractérisée en ce que** le générateur d'oscillations (77, 77A) et le dispositif de débit (71, 71A) sont reliés directement ou indirectement entre eux, de façon à ce qu'au moins une partie du fluide puisse être utilisée pour faire fonctionner le dispositif de débit (71, 71A) et le générateur d'oscillations (77, 77A).

4. Pièce à main dentaire (60, 90) selon l'une des revendications précédentes, **caractérisée en ce que**
l'axe d'oscillation (86) débouche dans une chambre (89) dans laquelle au moins une partie du dispositif de débit (71, 71A), par exemple une partie d'une tige de piston et une tête de piston, est disposée de manière mobile.

5. Pièce à main dentaire (60, 90) selon l'une des revendications précédentes, **caractérisée en ce que**
le générateur d'oscillations (77, 77A) avec l'axe d'oscillation creux (86) et le dispositif de débit (71, 71A), sont disposés le long d'un axe commun.

6. Pièce à main dentaire (60, 90) selon l'une des revendications précédentes, **caractérisée en ce qu'**un
manchon rotatif (51) est disposé via des alésages dans l'axe d'oscillation creux (86), lequel peut être mis en rotation de telle façon par de l'air comprimé sortant que l'axe d'oscillation creux (86) est mis en vibration.

7. Pièce à main dentaire (60, 90) selon la revendication 6, **caractérisée par** des espaces intermédiaires ou des conduites pour l'écoulement de l'air comprimé sorti à travers les alésages en direction de l'élément de couplage (64) sont prévus à l'intérieur de la pièce à main (60, 90).

8. Pièce à main dentaire (60, 90) selon l'une des revendications précédentes, **caractérisée en ce que**
la part de fluide entraînant le dispositif de débit (71, 71A) peut être amenée au dispositif de débit (71, 71A) par un espace intérieur de l'axe d'oscillation creux (86).

9. Pièce à main dentaire (60, 90) selon l'une des revendications précédentes, **caractérisée en ce qu'**un élément de blocage, par exemple un clapet anti-retour (73), est prévu pour interrompre le débit de fluide vers le dispositif de débit (71, 71A) et /ou vers le générateur d'oscillations (77, 77A).

10. Pièce à main dentaire (60, 90) selon l'une des revendications précédentes, **caractérisée par**
un dispositif d'émission de lumière (63, 93) permettant de fournir un rayonnement d'une longueur d'onde et d'une puissance de rayonnement pour durcir une matière de remplissage.

11. Pièce à main dentaire (60, 90) selon l'une des revendications précédentes, **caractérisée par**
une sonde (8, 98A, 98B, 98C) connectée ou pouvant être connectée à la pièce à main (60, 90) et pouvant être amenée à osciller par le générateur d'oscillations (77, 77A).

12. Pièce à main dentaire (60, 90) selon l'une des revendications précédentes, **caractérisée par**
un élément faisant ressort ou un actionneur actionnable par l'utilisateur pour rappeler l'élément de débit (82).

13. Pièce à main dentaire (60, 90) selon la revendication 10, **caractérisée par** des moyens de sécurité pour éviter une émission de lumière prématurée ou involontaire sur la matière de remplissage.

14. Pièce à main dentaire (60, 90) selon l'une des revendications précédentes, **caractérisée en ce que**
la sonotrode (50) ou le transmetteur d'oscillations (116A, 116B, 116C) comprend une réception dans laquelle un récipient de matière de remplissage (62, 92) peut être intégré, sachant que la réception est conçue en particulier en tant que réception oblongue (117A, 117B, 117C) avec une base (118A, 118B, 118C) et un bord (119A, 119B, 119C) tout autour.

15. Pièce à main dentaire (60, 90) selon l'une des revendications précédentes, **caractérisée par**
un récipient de matière de remplissage (62, 92) qui a un espace intérieur dans lequel la matière de remplissage est reçue, une ouverture de distribution (67) au travers de laquelle la matière de remplissage peut sortir, et une paroi arrière mobile pouvant être poussée, sachant que pendant le fonctionnement du dispositif de débit (71, 71A), du fait de la poussée vers l'avant de l'élément de débit (82), la paroi arrière est poussée en direction de l'ouverture de distribution (67), ce par quoi la matière de remplissage est comprimée hors du récipient de matière de remplissage (62, 92).
